# EUROPÄISCHE PATENTSCHRIFT

(11) **EP 2 752 533 B1**
(45) Veröffentlichungstag und Bekanntmachung des Hinweises auf die Patenterteilung: **08.07.2015**
(21) Anmeldenummer: 14163551.6
(22) Anmeldetag: 05.12.2002
(51) Int. Cl.: E04F 13/08, E04D 13/16, E04D 3/36

(54) **Vorrichtung zum Eintreiben eines Spreizelements in einen Dübel.**
Device for driving an expansion element into a dowel.
Dispositif d'enfoncement d'un élément expansible dans une cheville.

(30) Priorität: 05.12.2001 DE 10159632; 26.03.2002 DE 10213490
(43) Veröffentlichungstag der Anmeldung: 09.07.2014
(62) Teilanmeldung aus: 10012968.3
(73) Patentinhaber: EJOT GmbH & Co. KG, 57319 Bad Berleburg (DE)
(72) Erfinder: Tiemann, Joachim, 59846 Sundern (DE); Knebel, Ulrich, 57319 Bad Berleburg-Berghausen (DE); Hackler, Erhard, 57319 Bad Berleburg-Berghausen (DE)
(74) Vertreter: Hohgardt, Martin

(56) Entgegenhaltungen:
- EP-A1- 0 189 569
- EP-A2- 0 086 452
- EP-A2- 0 846 878
- DE-A1- 3 940 743

## Beschreibung

Die vorliegende Erfindung betrifft Dübel, Verfahren und ferner Vorrichtungen zur Montage von Dämmstoffplatten an einer Unterkonstruktion, wobei der Dübel einen Druckteller und eine daran anschließende Dübelhülse zur Aufnahme eines Spreizelements mit einem Spreizelementkopf umfasst, wobei die Dübelhülse eine Spreizzone aufweist, und wobei während der Montage eine Vertiefung durch den Dübel selbst in der Dämmstoffplatte ausgebildet wird.

Die handelsüblichen Dübel zur Montage von Dämmstoffplatten haben den Nachteil, dass sie die Bildung von Wärmebrücken nicht völlig verhindern können, was auch für Dübel mit Kunststoffumspritzung oder Köpfen aus Kunststoff gilt. Dies beruht hauptsächlich auf der Unterschiedlichkeit der Materialien aus denen der Dämmstoff einerseits und die Dübel andererseits gefertigt sind. Diese Unterschiedlichkeit kann auch zu unerwünschten Dübelabzeichnungen in der Putzschicht an den Außenwänden führen, insbesondere bei Einwirkung von Feuchtigkeit und Nässe. Bei der Verwendung einfacherer Putzqualitäten tritt dieser Mangel besonders häufig in Erscheinung. Zur Erreichung einer besseren Wärmedämmung, sowie zur Vermeidung von Dübelabzeichnungen in der Putzschicht wurde vorgeschlagen, Dübel in die Dämmstoffplatten versenkt zu montieren.

Ein Verfahren, bei dem gleichzeitig mit dem Bohren des Bohrlochs für den Dübel eine Vertiefung in der Dämmstoffplatte zur Aufnahme des Dübels erzeugt wird, ist aus EP 0 086 452 bekannt. In diesem Fall wird mittels eines Senkbohrers, der einen Fräskopf und einen scheibenförmigen Anschlag umfasst, beim Bohren des Bohrlochs im gleichen Arbeitsgang eine dem Durchmesser des Drucktellers entsprechende Vertiefung in die Dämmstoffplatte eingefräst und anschließend durch eine bereits auf den Druckteller aufgebrachte Abdeckung ausgefüllt. Dadurch, dass die Abdeckung werkseitig auf dem Druckteller bzw. Dübelkopf angebracht ist, wird bei der Montage ein zusätzlicher Arbeitsgang vermieden. Das Fräsen führt allerdings zu einem erheblichen Abtrag von Dämmstoff. Bei der großen Anzahl von Dübeln, die regelmäßig zur Befestigung von Dämmstoffplatten beim Bau eines Hauses zum Einsatz kommen, stellt der entstehende Frässtaub jedoch eine erhebliche Verschmutzung der Umwelt dar und kann in größeren Mengen auch beim Baupersonal zu gesundheitlichen Beeinträchtigungen führen. Zudem sind die Montageeigenschaften der Dübel mit werkseitig aufgebrachten Abdeckungen deutlich schlechter als bei vergleichbaren Dübeln ohne aufgebrachte Abdeckung. Durch die mangelnde Druckfestigkeit des Isoliermaterials und die deshalb begrenzten Einschlagkräfte sind nur geringe Dübelspreizkräfte möglich, was zu deutlich schlechteren Werten bei der Ausziehlast führen kann. In der Herstellung sind solche Dübel auch wesentlich kostspieliger als konventionelle Ausführungsformen. Zur Durchführung des bekannten Verfahrens ist außerdem noch ein spezieller, ebenfalls kostenaufwendig herzustellender Senkbohrer notwendig.

Eine weitere bekannte Lösung sieht eine Fräskrone z. B. aus Kunststoff vor, mit der, nachdem das Bohrloch gebohrt wurde, eine Vertiefung in den Dämmstoff eingefräst wird. Es wird dann der Dübel in das Bohrloch eingeführt und anschliessend gesetzt. Danach wird die Abdeckung aufgesetzt. Diese Lösung beinhaltet zwei Arbeitsgänge mehr als bei der EP 0 086 452 und ist damit zeitaufwendiger als diese. Außerdem ist auch hier durch den entstehenden Frässtaub eine erhebliche Belastung der Umwelt gegeben.

In der EP 1 088 945 wird ein Dämmelement offenbart, das aus Mineralfasern besteht und Markierungen für die Anordnung von Dämmstoffdübeln aufweist.

Dabei können die Markierungen in Vertiefungen im Dämmelement angeordnet, bzw. als Vertiefungen ausgebildet sein. Die Vertiefungen werden vorzugsweise mechanisch herausgearbeitet oder bei thermoplastischen Dämmstoffen durch lokale Erhitzung hergestellt. Die Herstellung solcher Dämmelemente ist einerseits mit erheblichen Kosten verbunden, andererseits lassen die vorgefertigten Vertiefungen dem Baupersonal vor Ort keinen Spielraum für eine von dem vorgegebenen Muster abweichende Anbringung der Dämmstoffdübel. Dabei wird auch nicht berücksichtigt, dass die jeweils günstigste geometrische Anordnung der Dämmstoffdübel bezüglich der Dämmstoffplatte je nach räumlichen Gegebenheiten und Witterungsverhältnissen stark variieren kann.

Des Weiteren sind Formteile aus Mineralwolle zur Schall- und Wärmedämmung von Haushaltsgeräten aus dem Gebrauchsmuster DE 296 22 196 bekannt. Diese weisen Materialbereiche auf, in denen Vertiefungen ausgebildet sind. Die Materialbereiche werden dabei durch Einschnitte gegenüber dem Umgebungsmaterial über die Tiefe der vorgesehenen Vertiefung freigestellt und bereits während der Produktion durch Druckstempel vorkomprimiert. Dabei wird das Material so komprimiert, dass es eine Restelastizität aufweist, um bei der Montage an Backöfen etc. begrenzt an gestalterische Änderungen angepasst werden zu können. Auch in diesem Fall handelt es sich um kostenaufwendige vorgefertigte Teile. Für die Bauindustrie, insbesondere im Hinblick auf die Montage mit Dämmstoffdübeln, sind solchermaßen hergestellte Teile ungeeignet, da sie nicht über die erforderliche Steifigkeit verfügen.

Aus der EP 0 189 569 ist ein Befestigungselement für die Befestigung von Dämmstoffplatten an einer Unterkonstruktion bekannt. Das Befestigungselement weist eine Druckplatte auf und eine mit der Druckplatte verbundene Hülse, wobei ein Verankerungselement, zum Beispiel in Form eines Stifts, in die Hülse einbringbar ist. Im Befestigungszustand greift ein Verankerungsbereich des Verankerungselements unmittelbar in die Unterkonstruktion ein, der andere Teil des Verankerungselements wirkt mit der Hülse beziehungsweise der Druckplatte zusammen und hält diese. An der Unterseite der Druckplatte ist eine umlaufende Kante angeordnet, die im Befestigungszustand in der Dämmstoffplatte steckt. Eine solche Kante ist jedoch nicht geeignet, um eine glatte Stirnfläche in das Dämmstoffmaterial einzuschneiden.

Der Erfindung liegt die Aufgabe zugrunde eine Vorrichtung zu schaffen, mit der die Verschmutzung der Umwelt durch das Fräsen des Dämmstoffs vermieden werden kann, die vertiefte Montage des Dübels im Dämmstoff mit möglichst wenig Arbeitsschritten gewährleistet werden kann, eine sauber ausgeformte Stirnfläche im Dämmstoff erzeugt werden kann, preisgünstigere Dübel eingesetzt werden können und schließlich eine feste Verankerung des Dübels in der Unterkonstruktion erreicht werden kann. Dies soll für Schlagdübel ebenso wie für Schraubdübel erreicht werden.

Erfindungsgemäß wird die Aufgabe durch die Vorrichtung wie im unabhängigen Anspruch 1 beansprucht gelöst.

Der der Erfindung zugrunde liegende Gedanke umfasst auch ein hier nicht beanspruchtes und nur beispielhaft beschriebenes Verfahren, bei dem a) ein Bohrloch durch die Dämmstoffplatte in die Unterkonstruktion gebohrt wird, b) der Dübel und das Spreizelement in das Bohrloch eingebracht werden, c) das Spreizelement in den Druckteller und die Dübelhülse eingetrieben wird, und wobei gleichzeitig d) der Druckteller in die Dämmstoffplatte unter Kompression der Dämmstoffplatte eingezogen wird, und die Dämmstoffplatte am Umfang des Drucktellers mit Hilfe von Schneidvorrichtungen eingeschnitten wird. Dabei können alle Schritte a) bis d) gleichzeitig ablaufen; die Schritte a) und b) können jedoch auch vor den Schritten c) und d) erfolgen, und zwar gemeinsam oder getrennt.

Andererseits können in einem hier nicht beanspruchten und deshalb nur beispielhaft beschriebenen Verfahren mindestens die folgenden Schritte durchgeführt werden a.) Bohren eines Bohrlochs durch die Dämmstoffplatte in die Unterkonstruktion, b.) Einschneiden eines Kreises mit mindestens dem Radius R in die Dämmstoffplatte mittels Schneidvorrichtungen, c.) Einbringen des Dübels und des Spreizelements in das Bohrloch, d.) Eintreiben des Spreizelements in den Druckteller und die Dübelhülse und gleichzeitiges e.) Einziehen des Drucktellers in die Dämmstoffplatte unter Kompression der Dämmstoffplatte. Diese Schritte können, müssen jedoch nicht in der genannten Reihenfolge ausgeführt werden.

Der Druckteller kann einen Drucktellerschaft aufweisen, der axial entlang der Dübelhülse verschiebbar ist. Durch die Verschiebung des Drucktellerschafts entlang der Dübelhülse kann die Länge des Dübels beim Eintreiben in das Bohrloch verkürzt werden. Die Verschiebbarkeit kann auf vielfältige Weise erreicht werden, etwa durch Gleitrillen in beiden Teilen. Statt einer Verschiebbarkeit der Bauteile gegeneinander können auch verformbare Bauteile verwendet werden, etwa eine Dübelhülse mit einer Art Knautschzone.

Der Druckteller kann eine Ausnehmung zur Aufnahme eines Antriebs, beispielsweise eines Sechskant-Antriebs aufweisen, damit dessen Drehbewegung auf den Druckteller übertragen werden kann. Alternativ dazu kann zum Beispiel auch ein Innentorx im Druckteller vorgesehen sein, in den das Spreizelement einrastet.

Der Dübel kann eine Verdrehsicherung aufweisen, um das anfängliche Eindrehmoment beim Eintreiben des Spreizelements zu übertragen. Diese etwa kann in der Vormontageposition mit dem bereits im Dämmstoff steckenden Druckteller erreicht werden oder im Bohrloch mit Außenrippen an der Dübelhülse.

Bei einem Verfahren mit den Schritten a) bis d) kann nach dem vollständigen Einziehen des Drucktellers in die Dämmstoffplatte in einem weiteren Schritt e) eine Abdeckung auf den vollständig versenkten Druckteller aufgesetzt werden, was bei entsprechender Arbeitsteilung unter Umständen zu schnelleren Abläufen führen kann, als wenn man die Abdeckung vorher etwa auf den Sechskant-Antrieb eines Bits einzeln aufsetzt.

Zum versenkbaren Montieren eines konventionellen Dübels kann die erfindungsgemäße Vorrichtung zum Eintreiben des Spreizelements in die Dübelhülse verwendet werden, wobei die Vorrichtung einen Tiefenanschlag mit Schneidvorrichtungen zum Einschneiden der Dämmstoffplatte entlang des Umfangs des Drucktellers aufweist.

Wie bereits oben erwähnt, kann in einem hier nur beispielhaft beschriebenen Verfahren bereits vor dem Einbringen des Dübels und des Spreizelements in das Bohrloch, ein Kreis in die Dämmstoffplatte eingeschnitten werden und zwar mit Hilfe von Schneidvorrichtungen, die an einer Vorrichtung zum Bohren des Bohrlochs angeordnet sind. Anschließend wird wiederum beim Eintreiben des Spreizelements der kreisförmige Ausschnitt in der Dämmstoffplatte komprimiert.

Bei einer zweckmäßigen Variante des oben beispielhaft beschriebenen Verfahrens wird Schritt b.) vor Schritt a.) ausgeführt, es wird also zunächst der Kreis in die Dämmstoffplatte eingeschnitten und dann erst das Bohrloch gebohrt. Würde das Bohrloch exzentrisch zum Einschnittkreis angeordnet, würde nämlich der Dübel während des Einziehens eine mit dem Einschnittkreis überlappende kreisförmige Fläche komprimieren und es entstünden nach dem Aufsetzen der Abdeckungen Löcher in der Dämmstoffplatte.

In einer bevorzugten Variante des oben beispielhaft beschriebenen Verfahrens laufen die Schritte a.) und b.) gleichzeitig ab, so dass bei der Montage des Dübels Zeit eingespart werden kann.

In einer weiteren vorteilhaften Variante des oben beispielhaft beschriebenen Verfahrens wird nach dem Einziehen des Drucktellers eine Abdeckung auf den vollständig versenkten Druckteller aufgesetzt, wodurch zwar ein Arbeitsgang mehr entsteht als bei werksseitig auf den Dübel aufgebrachten Abdeckungen; insgesamt aber eine deutlich stabilere Verankerung des Dübels in der Unterkonstruktion erreicht wird.

In einer weiteren Variante des oben beispielhaft beschriebenen Verfahrens umfassen die Schneidvorrichtungen einen Tiefenanschlag, damit gleichmäßig tief in die Dämmstoffplatten eingeschnitten werden kann, eine einheitliche Montagetiefe der Dübel gewährleistet werden kann und letztendlich auch die Abdeckungen passgenau eingesetzt werden können.

Des Weiteren kann eine hier nur beispielhaft beschriebene Vorrichtung zum Bohren eines Bohrlochs durch eine Dämmstoffplatte in eine Unterkonstruktion, einen Schaft zum Einstecken eines Bohraufsatzes umfassen, wobei der Schaft derart gestaltet ist, dass an ihm Schneidvorrichtungen zum Einschneiden eines Kreises in die Dämmstoffplatte anordenbar sind. Mit Hilfe dieser beispielhaften Vorrichtung können die Kreise in die Dämmstoffplatten entweder vor oder nach dem Bohren des Bohrlochs eingeschnitten werden. Dies kann drehend aber auch nicht drehend erfolgen.

Bei der beispielhaft beschriebenen Vorrichtung weisen die Schneidvorrichtungen einen Tiefenanschlag auf, um eine gleichmäßige Einschnitttiefe zu gewährleisten.

Des Weiteren kann eine hier nur beispielhaft beschriebene Vorrichtung zum Bohren eines Bohrlochs durch eine Dämmstoffplatte in eine Unterkonstruktion, einen Bohrerschaft umfassen, wobei an dem Bohrerschaft Schneidvorrichtungen zum Einschneiden eines Kreises in die Dämmstoffplatte angeordnet sind. Dadurch muss beispielsweise nicht erst nach dem Bohren des Bohrlochs bzw. der Bohrlöcher ein neuer Aufsatz in die Halterung der Vorrichtung eingespannt werden, um den kreisförmigen Einschnitt in die Dämmstoffplatten zu erzeugen. Außerdem wird auf diese Weise die konzentrische Anordnung des Einschnittkreises bezüglich des Bohrlochs sichergestellt. Um eine gleichmäßige Einschnitttiefe zu gewährleisten, können die Schneidvorrichtungen auch einen Tiefenanschlag umfassen.

Schneidvorrichtungen zum Einschneiden eines Kreises in eine Dämmstoffplatte, können derart gestaltet sein, dass sie auf einer Vorrichtung zum Bohren eines Bohrlochs durch eine Dämmstoffplatte in eine Unterkonstruktion anbringbar sind. Die Schneidvorrichtungen können dabei einen Tiefenanschlag umfassen.

Anhand der Zeichnungen wird die Montage eines Dübels mit Schneidvorrichtungen und eines konventionellen Dübels mit Hilfe der erfindungsgemäßen Vorrichtung veranschaulicht. Es zeigen:
- Fig. 1: einen Längsschnitt durch einen Dübel mit Schneidvorrichtungen zu Beginn der Montage,
- Fig. 2: einen Längsschnitt durch einen Dübel mit Schneidvorrichtungen in Endmontageposition,
- Fig. 3: einen Längsschnitt durch einen Dübel mit Schneidvorrichtungen in fertig montiertem Zustand mit aufgesetzter Abdeckung,
- Fig. 4: einen Längsschnitt durch einen konventionellen Dübel und eine erfindungsgemäße Eintreibvorrichtung, deren Tiefenanschlag mit Schneidvorrichtungen versehen ist.
- Fig. 5a: einen Längsschnitt durch eine konventionelle Vorrichtung zum Bohren eines Bohrlochs,
- Fig. 5b: einen Längsschnitt durch eine Vorrichtung zum Einschneiden eines Kreises in den Dämmstoff,
- Fig. 6: einen Längsschnitt durch eine Vorrichtung zum Bohren eines Bohrlochs und gleichzeitigem Einschneiden eines Kreises in den Dämmstoff,
- Fig. 7: einen Längsschnitt durch einen Dübel mit Spreizelement vor der Montage,
- Fig. 8: einen Längsschnitt durch einen Dübel in Endmontageposition,
- Fig. 9: einen Längsschnitt durch einen Dübel in Endmontageposition mit aufgesetzter Abdeckung.

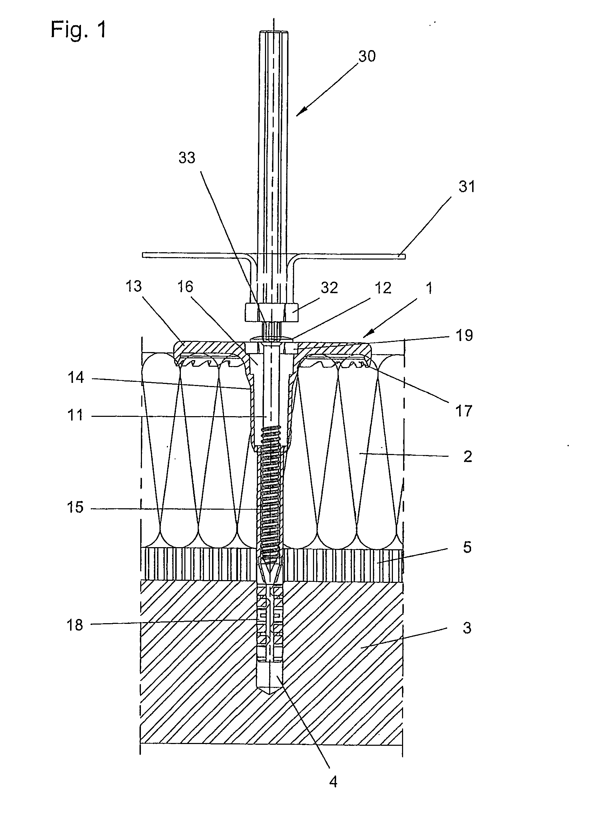

Fig. 1 zeigt den Dübel 1, der bereits durch eine Dämmstoffplatte 2 und eine Zwischenschicht 5 hindurch in das Mauerwerk 3 eingesteckt wurde. Der Drucktellerschaft 14 und die Dübelhülse 15 sind in diesem Zustand miteinander verbunden, um den Dübel in voller Länge einstecken zu können. Der an seiner Unterseite mit radial verlaufenden Schneidvorrichtungen 17 versehene Druckteller 13 liegt auf der Oberfläche der Dämmstoffplatte 2 auf, wobei die Schneidvorrichtungen 17 im Dämmstoff stecken. Der Druckteller 13 ist üblicherweise mit koaxial angeordneten Öffnungen versehen, es sind aber im Hinblick auf ein möglichst gleichmäßiges Komprimieren des Dämmstoffes auch Ausführungsformen ohne Öffnungen möglich. Das Spreizelement 11, vorzugsweise eine Innentorxschraube, ist hier mittels eines entsprechenden Antriebs 32, 33 bis zur Spreizzone 18 in die Dübelhülse 15 eingebracht worden, so dass der Spreizelementkopf 12 noch nicht in der Ausnehmung 16 aufliegt. Das Spreizelement 11 kann ohne Kunststoffumspritzung oder Kunststoffkopf ausgeführt werden, da kein Kontakt mit der Putzschicht und somit auch keine Korrosionsgefahr besteht. Liegt der Kopf 12 der Schraube 11 schließlich in der Ausnehmung 16 auf, beginnt der Vorgang des Komprimierens des Dämmstoffmaterials. Um zu erreichen, dass sich der Druckteller 13 während der Montage mitdreht, verrastet der Antrieb 32, 33 in einer dafür vorgesehenen Ausnehmung 19 im Druckteller 13. Eine andere Möglichkeit besteht darin, dass die Schraube 11 über eine Rastvorrichtung, wie beispielsweise ein Innentorx im Druckteller 13 einrastet. Der sich drehende Druckteller 13 schneidet sich durch die an seinem äußeren Rand angeordneten Schneidvorrichtungen 17 in den Dämmstoff ein und beginnt gleichzeitig damit den unterhalb des Drucktellers 13 gelegenen kreisrunden Ausschnitt im Dämmstoff zu komprimieren. Die äußeren Schneidvorrichtungen bewirken, dass eine saubere, d.h. glatte, hier radiale Stirnfläche geschaffen wird, was die Grundvoraussetzung für ein passgenaues Einsetzen und einen festen Halt der Abdeckung in der Dämmstoffplatte ist. Der Dämmstoff unter dem Druckteller 13 wird also hauptsächlich zusammengepresst, statt weggefräst. Es kann dabei auch geringfügig Dämmmaterial abgelöst werden, etwa durch die Schneidkanten an einem sich drehenden Druckteller 13. In jedem Fall wird jedoch die Umweltbelastung durch die Reduktion der Fräsabfälle deutlich vermindert. Die Verbindung zwischen Dübelhülse 15 und Druckteller 13 wird durch die Zugkraft der Schraube gelöst, wodurch der Druckteller 13 für die Komprimierung axial über die Dübelhülse 15 verschoben werden kann. Die Dübellänge wird dann sozusagen um die Montagetiefe verringert. Die Montagetiefe beträgt vorzugsweise 20 mm. Der Bereich zwischen Dübelhülse 15 und Druckteller 13, der in diesem Beispiel als Drucktellerschaft 14 ausgebildet ist und in dem der axiale Längenausgleich stattfindet, ist mit speziellen Dichtbereichen, beispielsweise Dichtlippen, versehen, um die Dichtigkeit der Dübelhülse 15 zu gewährleisten. Während der Komprimierung des Dämmstoffes dreht sich die Schraube mit zunehmender Einzugtiefe weiter axial in die Spreizzone 18 der Dübelhülse 15 hinein und erzeugt zum Beispiel durch Reibschluss die gewünschte feste Verankerung im Mauerwerk 3. Der Begriff "Spreizzone" bezeichnet hier jede Form von Verankerungs- oder Verklemmungsmechanismus des Dübels 1 in der Unterkonstruktion 3 infolge des Einführens des Spreizelements 11. Die Schraubenlänge ist auf den Endmontagezustand abgestimmt. Steckt das Gewinde vor dem Komprimieren zum Beispiel 10 mm in der Spreizzone und wird der Dübel dann in diesem Beispiel 20 mm tief im Dämmstoff montiert, so ergibt sich hier eine Einschraublänge in das Mauerwerk von 30 mm. Diese Werte können nach Art des verwendeten Dämmstoffmaterials sehr unterschiedlich ausfallen. Um gleichbleibende Montagetiefen sicherzustellen, ist die Eintreibvorrichtung 30 mit einem Tiefenanschlag 31 ausgestattet.

Die Kompression des Dämmstoffes hat zur Folge, dass in den Dämmstoff bewußt Druckspannungen durch das Zusammendrücken des Dämmstoffes eingeleitet werden, um diesen zu verdichten. Dadurch wird das System aus Dämmstoffmaterial und Druckteller 13 im Belastungszustand steifer. Der Grund dafür ist, dass im Belastungszustand beim Überziehen des Dämmstoffmaterials über den Druckteller bzw. Durchziehen des Drucktellers durch das Dämmstoffmaterial, dieses nicht mehr leicht zusammengedrückt werden kann, da es bereits komprimiert bzw. verdichtet ist. Dadurch ist das Last-Verformungsverhalten steifer ausgebildet, weil bei gleicher Last deutlich geringere Verformungswege vorliegen, als bei nicht komprimierten bzw. gefrästen Dämmstoffen die nicht verdichtet sind.

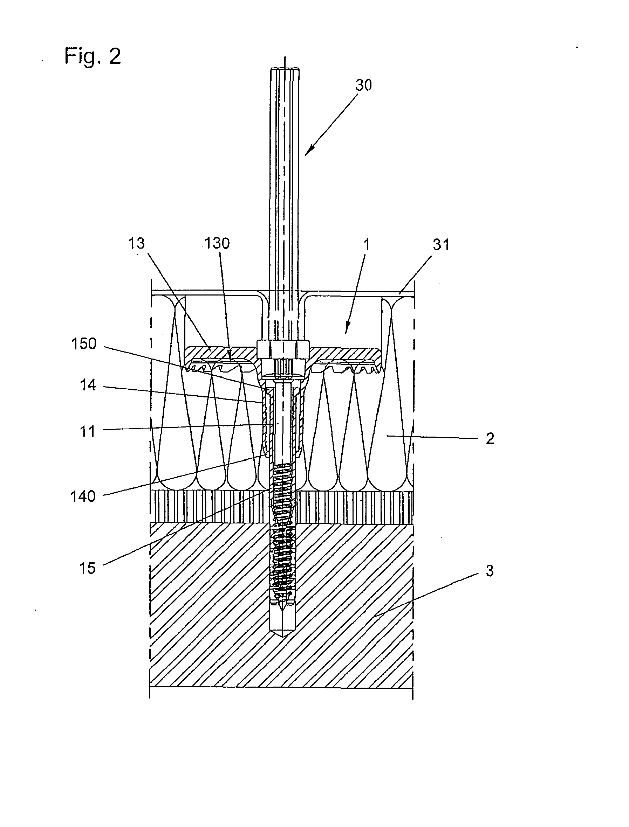

Fig. 2 zeigt den Dübel 1 in Endmontageposition, wobei der Tiefenanschlag 31 der Eintreibvorrichtung 30 auf der Oberfläche der Dämmstoffplatte aufliegt, und wobei der Abstand zwischen dem Tiefenanschlag 31 und der Unterkante 130 des Drucktellers 13 vorzugsweise 20 mm beträgt. Die Dübellänge ist jetzt um die Montagetiefe verringert, d.h. der Druckteller 13 mit Drucktellerschaft 14 ist beim Komprimieren des Dämmstoffes auf der Dübelhülse verschoben worden. Die anfängliche Verbindung zwischen der Dübelhülse 15 und dem Drucktellerschaft 14 ist gelöst. Der umfängliche Vorsprung 150 an dem zur Außenseite gewandten Ende der Dübelhülse 15 und der korrespondierende umfängliche Vorsprung 140 an dem dem Mauerwerk zugewandten Ende des Drucktellerschafts 14 sorgen für eine gleitende axiale Führung des Drucktellerschafts 14 auf der Dübelhülse 15. Die Vorsprünge 140, 150 sind vor der Montage kraft-, form- oder stoffschlüssig verbunden, zum Beispiel verklebt oder über eine Sollbruchnaht miteinander verbunden; zu Beginn des Komprimiervorgangs wird diese Verbindung aufgrund der Zugkraft des Spreizelements 11 beim Einschrauben gelöst. Im Endmontagezustand liegt der umfängliche Vorsprung 150 der Dübelhülse knapp unterhalb des in der Ausnehmung 16 aufliegenden Schraubenkopfes 12.

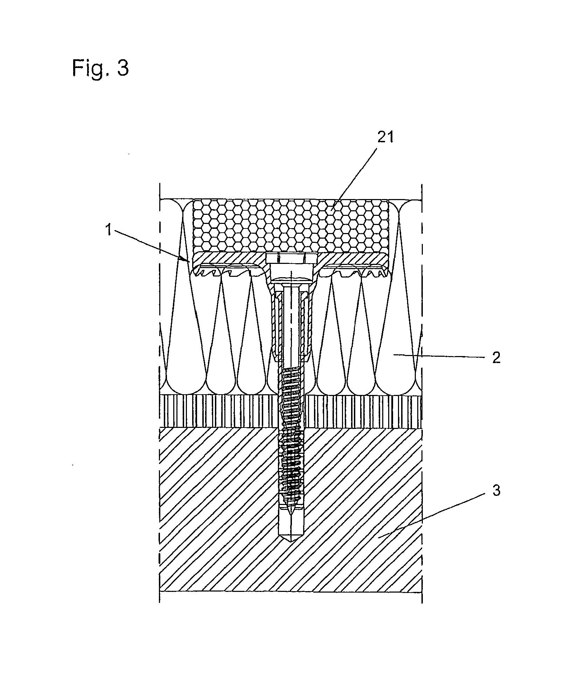

Fig. 3 zeigt den Dübel 1 in fertig montiertem Zustand mit aufgesetzter Abdeckung 21, wobei die Abdeckung 21 im Beispiel genau mit der Oberfläche der Dämmstoffplatte 2 abschließt. Ein nachträgliches Abschleifen einer teilweise hervorstehenden Abdeckung 21 ist allerdings auch möglich. In diesem Fall muss man jedoch wieder einigen Fräs- bzw. Schleifabfall in Kauf nehmen. Die Abdeckung kann separat im Anschluss an die Montage des Dübels eingesetzt werden, oder sie kann synchron mit der Montage gesetzt werden, indem sie zuvor auf den Sechskant-Antrieb 32 eines Bit 33 aufgesetzt wird. Um den Halt der Abdeckung besonders fest zu gestalten, ist es denkbar, die Schneidvorrichtungen 17 leicht nach Außen zu richten, um die entstehende Vertiefung leicht konisch zu gestalten. Diese Verformung der Schneidvorrichtungen kann z. b. über eine Wölbung des Drucktellers während der Montage erfolgen. Ebenso kann die Abdeckung bei einer zylindrischen Vertiefung konisch gestaltet werden. Die Abdeckung ist vorzugsweise aus dem selben Material wie die verwendeten Dämmstoffplatten hergestellt. Als Materialien kommen beispielsweise in Frage Styropor, Polyurethanschaum, Isolierkork, Holzwolle, Holzfaser, Kokosfaser oder Mineralwolle.

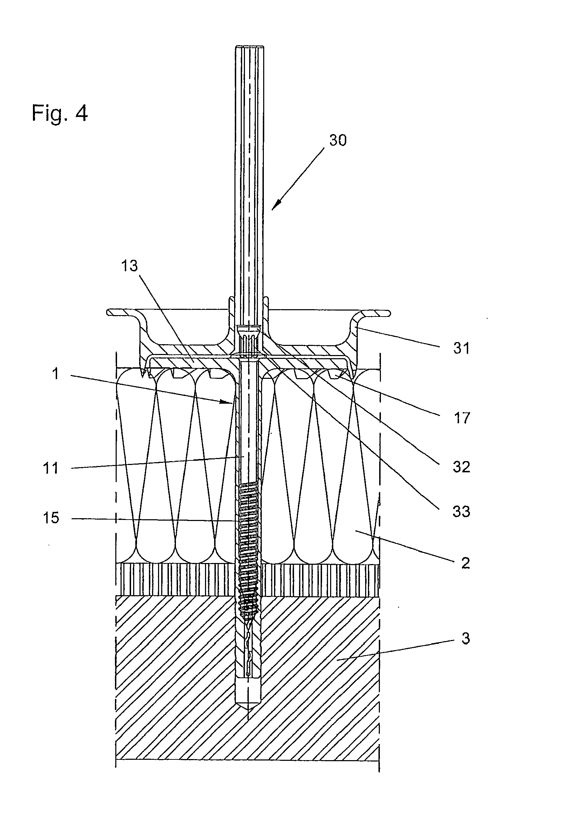

Fig. 4 zeigt schliesslich einen konventionellen Dübel 1, dessen Spreizelement 11 mit Hilfe eines Ausführungsbeispiels der erfindungsgemäßen Vorrichtung 30, bzw. deren Antrieb 32, 33 in die Dübelhülse 15 eingebracht wird. Der Dübel 1 weist keine Schneidvorrichtungen auf, dafür sind an dem Tiefenanschlag 31 Schneidvorrichtungen 17 entlang des Umfangs des Drucktellers 13 angeordnet, die in die Dämmstoffplatte 2 einschneiden, während der Druckteller 13 einzieht und den Dämmstoff komprimiert. Auf diese Weise können auch konventionelle Dübel versenkt montiert werden.

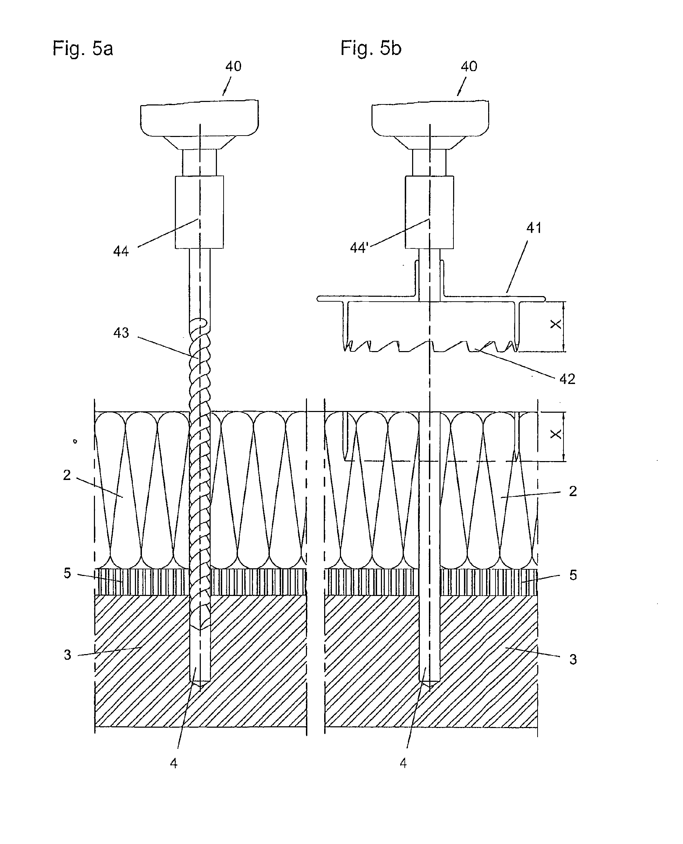

Fig. 5a zeigt die Vorrichtung 40 zum Bohren eines Bohrlochs 4 mit dem am Bohrerschaft 44 eingespannten Bohrer 43 beim Bohren eines Bohrlochs 4 durch die Dämmstoffplatte 2, die Zwischenschicht 5 und das Mauerwerk 3.

Fig. 5b zeigt die Vorrichtung 40 zum Einschneiden in den Dämmstoff, mit den am Schaft 44' eingespannten Schneidvorrichtungen 42, die auch einen Tiefenanschlag 41 aufweisen. Die Schneidvorrichtungen 42 mit Tiefenanschlag 41 können beispielsweise mit einem Innentorx oder einer sechskantförmigen Öffnung ausgestattet sein und somit auf einen korrespondierenden Schaft 44' bzw. ein korrespondierendes Montagebit aufgesteckt werden. Es ist auch denkbar, dass die Schneidvorrichtungen 42 mit dem Tiefenanschlag 41 fest an dem Schaft 44' angebracht sind oder mit diesem verrasten oder auf eine andere geeignete Art und Weise mit ihm zusammenwirken. Die sich drehenden Schneidvorrichtungen 42 schneiden, nachdem das Bohrloch 4 mit einer konventionellen Vorrichtung gebohrt wurde, in die Dämmstoffplatte 2 ein und bewirken, dass eine saubere, d.h. glatte, in diesem Fall radiale Stirnfläche geschaffen wird, was die Grundvoraussetzung für ein passgenaues Einsetzen und einen festen Halt der Abdeckung 21 in der Dämmstoffplatte 2 ist. Hierbei kann allerdings auch durch die sich drehenden Schneidkanten etwas Dämmstoffmaterial abgelöst werden. Je nach Dämmstoffmaterial muss die Vorrichtung zum Einschneiden in den Dämmstoff nicht drehend eingebracht werden, sondern kann auch als eine Art Ausstecher lediglich in den Dämmstoff eingedrückt werden. In jedem Fall wird jedoch die Umweltbelastung durch die erhebliche Reduktion der Fräsabfälle deutlich vermindert. Der Tiefenanschlag 41 sorgt für eine einheitliche Einschneidtiefe X in die Dämmstoffplatten 2.

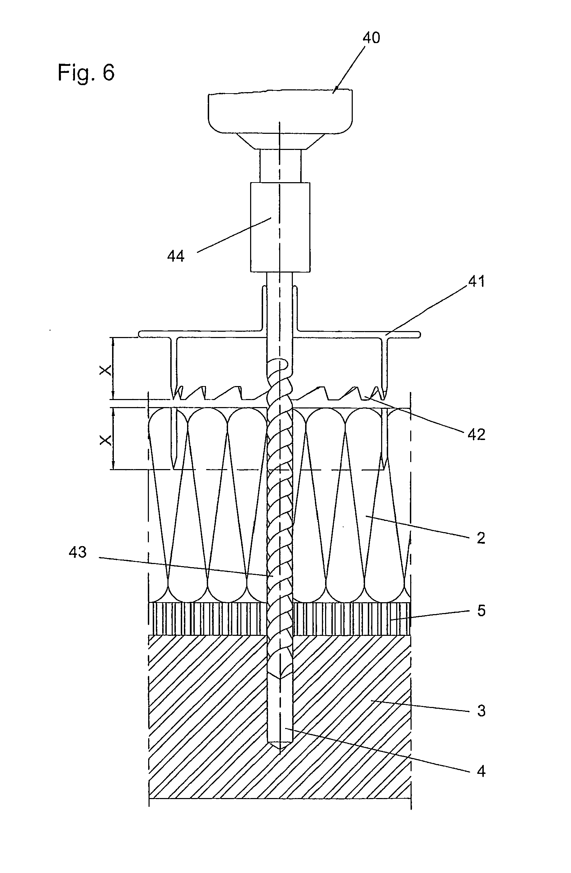

Fig. 6 zeigt die Vorrichtung 40 zum Bohren eines Bohrlochs 4 mit dem am Bohrerschaft 44 eingespannten Bohrer 43, wobei die Schneidvorrichtungen 42 mit dem Tiefenanschlag 41 ebenfalls am Bohrerschaft 44 angeordnet sind. Es besteht auch bei dieser Ausführungsform die Möglichkeit, dass die Schneidvorrichtungen 42 mit Tiefenanschlag 41 fest an dem Bohrerschaft 44 angebracht sind oder dass sie, je nach Ausgestaltung des Bohrerschafts 44, auf diesen aufgesteckt werden können, mit ihm verrasten oder anderweitig mit ihm in Wirkung stehen. Die Vorrichtung 40 ermöglicht es, dass gleichzeitig mit dem Bohren des Bohrlochs 4 der kreisförmige Einschnitt mit der Tiefe X in die Dämmstoffplatte 2 erfolgt. Zudem wird mit Hilfe dieser Vorrichtung die gewünschte Anordnung des Einschnittkreises bezüglich des Bohrlochs gewährleistet und damit Löcher bzw. Lücken im Dämmmaterial vermieden.

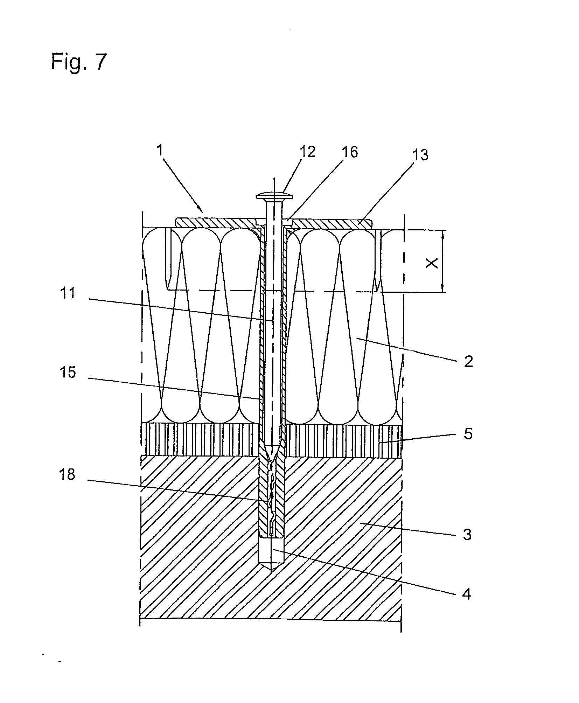

Fig. 7 zeigt einen Dübel 1 im Vormontagezustand, der durch die Dämmstoffplatte 2 und die Zwischenschicht 5 hindurch in das Mauerwerk 3 eingesteckt wurde. Der Druckteller 13 mit der Ausnehmung 16 zur Aufnahme des Spreizelementkopfes 12 liegt dabei auf der Oberfläche der Dämmstoffplatte 2 auf und zwar dergestalt, dass sich die durch den Einschnittkreis definierte Dämmstofffläche genau unterhalb des Drucktellers 13 befindet. Diese zur Kompression vorgesehene Fläche ist genauso groß oder auch etwas größer als die Fläche des Drucktellers 13. Die Spreizzone 18 des Dübels 1 reicht bereits in das Mauerwerk 3 hinein. Das Spreizelement 11 mit dem Spreizelementkopf 12 ist bereits in die Dübelhülse 15 eingesteckt, aber liegt noch nicht in der Ausnehmung 16 des Drucktellers 13 auf. Das Spreizelement 11 ist in diesem Beispiel als Nagel ausgebildet, es kann aber genauso gut eine Schraube verwendet werden. Das Spreizelement 11 kann des Weiteren mit oder ohne Kunststoffumspritzung oder Kunststoffkopf ausgeführt werden, da kein Kontakt mit der Putzschicht und somit auch keine Korrosionsgefahr besteht.

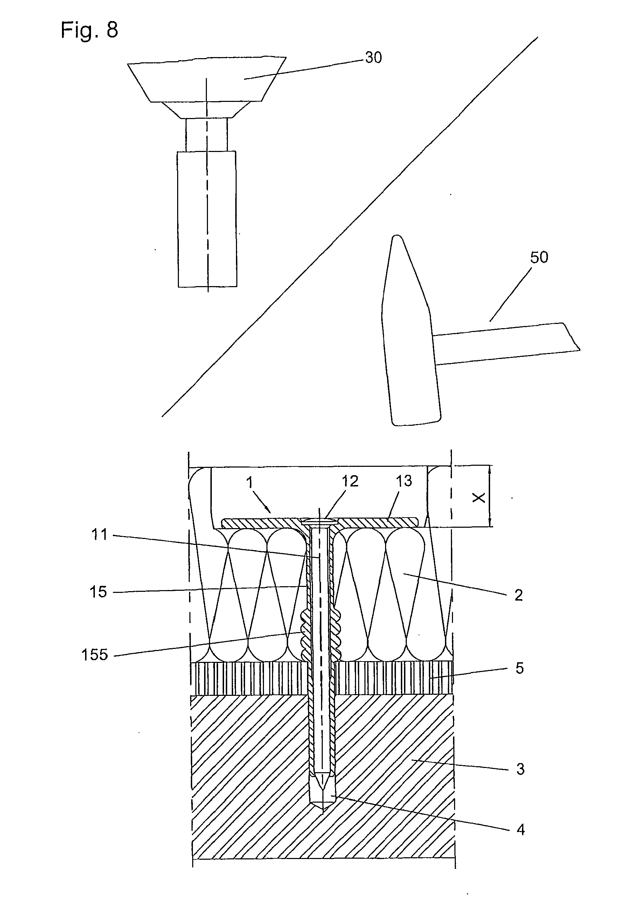

Fig. 8 zeigt einen Dübel 1 nach der Kompression des unter dem Druckteller 13 liegenden kreisförmigen Dämmstoffausschnitts. Der Vorgang des Komprimierens des Dämmstoffmaterials beginnt, wenn der Kopf 12 des Spreizelements 11 in der Ausnehmung 16 des Drucktellers 13 aufliegt und durch eine geeignete Vorrichtung zum Setzen von Dübeln 30 die notwendige Kraft zum vollständigen Eintreiben des Spreizelements aufgebracht wird. Dies kann im Fall von nagelförmigen Spreizelementen 11 auch manuell mittels eines Hammers 50 geschehen. Der Dämmstoff unter dem Druckteller wird also hauptsächlich zusammengepresst, statt weggefräst. Während der Komprimierung des Dämmstoffs wird das Spreizelement 11 immer weiter axial in die Spreizzone 18 der Dübelhülse 15 eingebracht und erzeugt beispielsweise durch Reib-, Form- oder Stoffschluss die gewünschte feste Verankerung im Mauerwerk 3. Der Begriff "Spreizzone" bezeichnet hier jede Form von Verankerungs- oder Verklemmungsmechanismus des Dübels 1 in der Unterkonstruktion 3 infolge des Einführens des Spreizelements 11. Durch die hier dargestellte Verwendung eines Dübels 1 mit einer Knautschzone 155, die sich während des Komprimiervorgangs innerhalb des Dämmmaterials bildet, kann zudem verhindert werden, dass die Spreizzone 18 im Mauerwerk 3 nachrutscht. Die dadurch hervorgerufene Verkürzung der Dübelhülse 15 ermöglicht außerdem die Verwendung von kürzeren, also preisgünstigeren Spreizelementen 11.

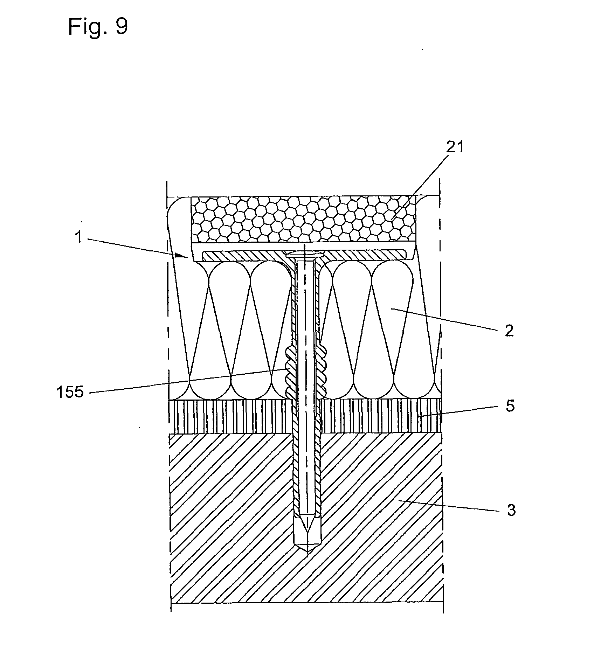

Fig. 9 zeigt den Dübel 1 in fertig montiertem Zustand mit ausgebildeter Knautschzone 155 und aufgesetzter Abdeckung 21, wobei die Abdeckung 21 im Beispiel genau mit der Oberfläche der Dämmstoffplatte 2 abschließt. Um ein nachträgliches Abschleifen der Abdeckung zu vermeiden, kann auch ein Freiraum zwischen dem Druckteller und der Abdeckung vorgesehen werden, dadurch kann die Abdeckung immer oberflächenbündig zur Dämmstoffplatte positioniert werden. Die Abdeckung kann separat im Anschluss an die Montage des Dübels eingesetzt werden, oder sie kann synchron mit der Montage gesetzt werden, indem sie zuvor auf die Vorrichtung zum Setzen von Dübeln 30 aufgesetzt wird. Ebenso kann die Abdeckung bei einer zylindrischen Vertiefung konisch gestaltet werden. Die Abdeckung ist vorzugsweise aus dem selben Material wie die verwendeten Dämmstoffplatten hergestellt. Als Materialien kommen beispielsweise in Frage Styropor, Polyurethanschaum, Isolierkork, Holzwolle, Holzfaser, Kokosfaser oder Mineralwolle.

Die vorstehend beschriebenen Beispiele können nicht nur auf einen Schraubdübel, sondern genauso auf einen Schlagdübel angewandt werden, wobei das zuletzt beschriebene Verfahren vorzugsweise bei der Montage von Schlagdübeln zum Einsatz kommt.

## Patentansprüche

1. Vorrichtung (30) zum Eintreiben eines Spreizelements (11) in einen Dübel (1) mit Druckteller (13) zur Halterung einer Dämmstoffplatte (2) an einer Unterkonstruktion (3), wobei die Vorrichtung (30) einen Antrieb (32, 33) zum Eingriff in das Spreizelement (11) aufweist
**gekennzeichnet durch**
einen Tiefenanschlag (31) mit Schneidvorrichtungen (17) zum Einschneiden der Dämmstoffplatte (2) entlang des Umfangs des Drucktellers (13), während der Druckteller (13) in den Dämmstoff einzieht und den Dämmstoff komprimiert.

## Claims

1. Apparatus (30) for driving in an expansion element (11) into a dowel (1) having a pressing plate (13) for holding an insulating plate (2) onto a substructure (3), wherein the apparatus (30) comprises a drive (32, 33) for engaging with the expansion element (11)
***characterized by***
a depth stop (31) with cutting means (17) for cutting into the insulating plate (2) at the circumference of the pressing plate (13), during which the pressing plate (13) is pulled into the insulation and compresses the insulation.

## Revendications

1. Dispositif (30) pour enfoncer un élément expansible (11) dans une cheville (1) avec une plateau presseur (13) pour le maintien d'une plaque en matériau isolant (2) sur une structure porteuse (3), le dispositif (30) comprenant un entraineur (32, 33) insérable dans l'élément expansible,
**caractérisé par**
une butée de profondeur (31) avec des dispositifs de coupe (17) pour découper la plaque en matériau isolant (2) le long de la périphérie du plateau presseur (13), tandis que le plateau presseur (13) pénètre dans le matériau isolant et comprime le matériau isolant.
